# EUROPEAN PATENT SPECIFICATION

(11) **EP 2 547 993 B1**
(45) Date of publication and mention of the grant of the patent: **14.08.2019**
(21) Application number: 11708827.8
(22) Date of filing: 14.03.2011
(51) Int. Cl.: G01J 5/08, G01J 5/58, G01K 11/32

(54) **INFRARED OPTICAL FIBRE SENSOR**
INFRAROT-GLASFASER-SENSOR
CAPTEUR INFRAROUGE À FIBRES OPTIQUES

(30) Priority: 15.03.2010 GB 201004215
(43) Date of publication of application: 23.01.2013
(73) Proprietor: B-SENS, 7000 Mons (BE)
(72) Inventor: DEBLIQUY, Marc, B-7000 Mons (BE); CAUCHETEUR, Christophe, B-7000 Mons (BE); MEGRET, Patrice, B-7000 Mons (BE); OLIVIER, Marie-Georges, B-7000 Mons (BE); RENOIRT, Jean-Michel, B-7000 Mons (BE)
(74) Representative: ARC-IP
(86) International application number: PCT/EP2011/053816
(87) International publication number: WO 2011/113797

(56) References cited:
- J.-M. RENOIRT, C. CAUCHETEUR, P. MÉGRET, AND M. DEBLIQUY: "Infrared radiation detector using a pair of fiber Bragg gratings", PROC. SPIE ON OPTICAL SENSING AND DETECTION, vol. 7726, 772606, 12 April 2010 (2010-04-12), pages 1-8, XP002640007, DOI: 10.1117/12.854126
- CRUNELLE C ET AL: "Fast demodulation technique for a quasi-distributed temperature sensor", PROCEEDINGS OF THE SPIE ON OPTICAL MEASUREMENT SYSTEMS FOR INDUSTRIAL INSPECTION V, vol. 6616, 661616, 2007, pages 1-8, XP002640014, THE INTERNATIONAL SOCIETY FOR OPTICAL ENGINEERING USA ISSN: 0277-786X
- CRUNELLE C ET AL: "Original interrogation system for quasi-distributed FBG-based temperature sensor with fast demodulation technique", SENSORS AND ACTUATORS A, vol. 150, no. 2, 25 March 2009 (2009-03-25), pages 192-198, XP026005922, ELSEVIER SEQUOIA S.A., LAUSANNE, CH ISSN: 0924-4247, DOI: 10.1016/J.SNA.2008.11.018 [retrieved on 2008-11-30]
- CRUNELLE C ET AL: "Fast demodulation technique for a quasi-distributed temperature sensor", VISUAL COMMUNICATIONS AND IMAGE PROCESSING; 20-1-2004 - 20-1-2004; SAN JOSE,, vol. 6616, 1 January 2007 (2007-01-01), pages 661616.1-661616.8, XP002640014, DOI: 10.1117/12.726157 ISBN: 978-1-62841-730-2

## Description

The present invention relates to infrared radiation sensors; in particular, it relates to an optical fibre sensor for the measurement of infrared radiation.

Conventionally, measurement of infrared radiation has been carried out at discrete positions or points using infrared radiation point sensors, for example, bolometers, photodiodes, phototransistors or photoresistors. In applications in which a zone rather that a single point is to be monitored, for example for detection of fires or hot spots, it is often necessary to install a large number of sensors in order to cover the zone. A network of individual sensors is then built from which individual signals need to be collected; moreover each sensor has to be connected to the power supply. Installing such a large number of sensors can be inconvenient and expensive.

Temperature measurements may be used with point sensors to provide an indication of incident infrared radiation, for example, the temperature rise of an infrared radiation absorbing material being measured when exposed to infrared radiation and compared to an unexposed reference without the absorbing material. Temperature measuring elements such as thermocouples, thermistors and pyroelectric materials may be used.

In the field of optical measurements, optical fibres may be modified in order to include temperature measuring elements: Fibre Bragg Gratings (FBG) and Long Period Gratings (LPG), for example, may allow quasi-distributed measurements. Fibre gratings are an induced modulation of the refractive index of the fibre core at a portion along its length. Fibre gratings may be defined and characterised by the following parameters: Λ index modulation period, *δ* n modulation amplitude and total length. These period gratings act as selective mirrors which reflect light travelling through the fibre at a given wavelength (very sharp peak) called the Resonance wavelength (also called the Bragg wavelength in the case of FBGs). For FBGs, the nominal index modulation period Λ is typically about 500 nm and the nominal Bragg wavelength lies around 1500 nm. For LPGs, the nominal index modulation period Λ is typically about 500 µm and the transmitted spectrum shows several nominal resonance wavelengths in the range 1000 to 2000 nm. The actual Bragg or resonance wavelengths depend on the temperature. For a large range (from -50 to +300°C), the actual Bragg or resonance wavelength shifts linearly from its nominal value as a function the temperature. For FBGs, the wavelength shift is about 10 pm/°C and for LPGs, the wavelength shift is about 100 pm/°C (the sensitivity to temperature is higher but the peaks are less sharp) (pm=picometre). Gratings are commonly used for measuring temperature in a quasi-distributed way by arranging a plurality of measuring points along the same fibre. Prior art devices are known from CRUNELLE C ET AL: "Fast demodulation technique for a quasi-distributed temperature sensor", PROCEEDINGS OF THE SPIE - THE INTERNATIONAL SOCIETY FOR OPTICAL ENGINEERING USA, vol. 6616, 2007, page 661616 (8 pp.) and CRUNELLE C ET AL: "Original interrogation system for quasi-distributed FBG-based temperature sensor with fast demodulation technique",SENSORS AND ACTUATORS A, ELSEVIER SEQUOIA S.A., LAUSANNE, CH, vol. 150, no. 2, 25 March 2009, pages 192-198.

According to one of its aspects, the present invention provides an infrared radiation sensor as defined by claim 1 and an optical fiber as defined in claim 13. The dependent claims define preferred aspects of the invention.

Infrared radiation sensors in accordance with the invention provide advantageous properties including one or any combination of:
- quasi-distributed sensing may be obtained (as opposed to a single point measurement);
- as opposed to a multiple sensors network, the installation and maintenance cost may be reduced and reliability of the system improved;
- a single optical fibre may be used easily and cost-efficiently for large measurement zones, e.g. for heat detection in tunnels, storage halls, floor voids, ceilings, cable ducts or sewers;
- the response time may be extremely fast (only a few seconds);
- the sensor may be advantageous for early fire detection as it detects infrared radiation emitted by the fire rather than ambient temperature increase;
- the optical fibre sensor provides immunity to electromagnetic interferences, possibilities of interrogation in numerous points along the same fibre, low weight and small volume, flexibility, stability, high temperature tolerance, durability and safety.

The arrangement comprising using spaced gratings for the IR detection zones and reference gratings positioned adjacent to IR detection zone grating so as to form spaced detection zones which comprise an IR detection zone grating and an adjacent reference grating allows for compensation of variations in ambient temperature. The IR detection zone gratings are associated with the IR absorber or IR absorbing material and work as IR sensor whereas the reference gratings are preferably not associated, covered or coated by an IR absorbing material, and may be used to measure external temperature and/or compensate for fluctuations in external temperature.

The reference gratings may be associated, covered or coated with an IR reflector; this may be used to accentuate the difference between the magnitude and/or the speed of changes or shifts between the reference granting and the IR detector grating of a detection zone.

The gratings may comprise spaced Fibre Bragg Gratings (FBGs) or Long Period Gratings (LPGs) arranged along the optical fibre. Each spaced IR detector zone grating is associated with, more preferably covered by, an infrared absorbing material. Such an IR absorbing material increases its temperature when subjected to IR radiation; it advantageously absorbs wavelengths in the range 0.7 to 25 µm and preferably shows an absorption coefficient of at least 10⁴ cm⁻¹. The infrared absorbing material may be selected from the group consisting of CuO, MnO₂, C, Fe₃O₄, Co₃O₄ and organic black dyes; it may be used alone or incorporated into a matrix. Advantageously, the infrared absorbing material is present as a coating layer or included in a coating layer, coated at the external surface of the optical fibre; it may be an exposed coating layer. In some embodiments of the invention, the infrared absorbing material is present on substantially the whole external surface of the optical fibre; it may, in this case, be absent from the reference zones. In the presence of infrared radiation, the temperature of the infrared absorbing material rises; this rise of temperature, which is representative of the incident infrared radiation, affects the gratings of the IR detection zone, which slightly change: a shift of the resonance wavelength of the grating is observed. Such a shift may be detected by signal processing equipment, when light is injected through the fibre comprising the gratings, to provide information on the magnitude of incident IR radiation and/or the position along the fibre at which a change in IR intensity has been sensed. This sensor arrangement may be used either in transmission or in reflection with an optical circulator.

There may or may not be a direct contact between the grating of the detection zone and the IR absorbing material, provided that heat generated by the IR absorbing material still reaches the IR detection zone grating. The IR absorbing material may be deposited by techniques including thermal vacuum deposition, sputtering, dip coating, sol-gel processing and chemical vapour deposition (which may be plasma enhanced).

It may be advantageous to arrange the IR detection zone grating and the reference gratings with a slightly different period, in order to facilitate differentiation between their resonance peaks. The difference in wavelength may be chosen in such a way that the peak corresponding to the reference grating and the peak corresponding to the grating associated with the IR absorbing material never coincide, e.g. by giving the reference grating a shorter Bragg wavelength and by separating the resonance wavelengths by at least 0.1 nm. The temperature increase of the absorbing material may then be revealed by a shift in the Bragg or resonance wavelength associated therewith. The temperature increase of the grating of the detection zone compared to the reference temperature is directly linked to the IR radiation intensity. There is a monotonically increasing relationship between the temperature rise and the incident flux of IR radiation.

In alternative embodiments, the IR detection zone grating and the reference grating may be arranged to have the same period. In this case, the resonance peaks of the gratings will be superimposed one upon the other such that they are convoluted. A shift in the resonance frequency of the IR detection zone grating in relation to the resonance frequency of the reference grating will cause a de-convolution or separation of the resonance peaks. This separation of the resonance peaks from an initial partially of totally superimposed configuration will result in an increase in the total power reflected (or a decrease in the total power transmitted). A signal processing system which detects the change in power reflected or transmitted in this case may be implemented in a simpler and more cost effective manner than other more complex signal processing approaches.

In one embodiment of the invention, a sheath may be present around the fibre at the IR detection zone at positions where gratings associated with IR absorbing material are present. This may increase the sensitivity of the device. The sheath is advantageously made of a material able to provide a confinement of the heat around the IR detection zone grating, by allowing a maximum of IR radiation to converge towards the fibre and, in particular, towards the absorbing material. The heat fluxes and energy equilibria may then bring the IR absorbing material to higher temperatures; this may increase the sensitivity of the device. The sensitivity (shift per unit of flux) of such an IR sensor may be at least 0.01 pm/(W/m²), preferably at least 0.2 pm/(W/m²). The sheath may advantageously be a glass cylinder (e.g. a capillary tube), arranged around the fibre.

In another embodiment of the invention, the sensor may comprise a mirror adapted to concentrate IR radiation towards the fibre at the IR detection zone. Preferably the fibre is positioned at or in the region of the focal point of the mirror; the mirror may be cylindrical or parabolic. Such arrangement may concentrate incident IR radiation on the fibre and/or on the IR absorber and thereby increasing the sensitivity of the device. Moreover this embodiment may also comprise sheaths as described previously; this combination may further increase the sensitivity of the device. The sensitivity (shift per unit of flux) of such an IR sensor having said combination of sheath and mirror, may be at least 0.06 pm/(W/m²), preferably at least 0.08 pm/(W/m²).

Known techniques may be associated with the infrared radiation sensor according to the invention, e.g. OTDR or cascaded gratings, to determine the position of the source of IR radiation along the fibre.

Advantageously, sensors according to the present invention have a detection limit of at least 100 W/m².

The term infrared radiation as used herein indicates radiation having wavelengths in the range 0.7 µm to 25 µm.

The distance along the optical fibre between spaced detection zones may be ≥ 1m, ≥ 2m, ≥ 5m, ≥ 10m, ≥ 50m, ≥ 100m, ≥ 200m, ≥ 500m, or ≥ 1000m; it may be ≤ 2000 m, ≤ 1000 m, ≤ 500 m, ≤ 100 m or ≤ 50 m. The distance between spaced detection zones should be appropriate for the application; for example, if used to monitor infrared radiation in a 5km long tunnel, a distance of about 50 m between detection zones may be appropriate.

The distance along the optical fibre between the IR detection zone grating and the reference grating of a or of each detection zone may be ≥ 1 cm, ≥ 2cm, ≥ 5 cm, ≥ 10 cm, or ≥ 50 cm, it may be ≤ 2 m, ≤ 1 m, ≤ 50 cm or ≤ 20 cm. Preferably, the distance along the optical fibre between the IR detection zone grating and the reference grating of a or of each detection zone is i) greater than 2 cm, typically greater than 3 cm (this helps to provide sufficient physical separation between the gratings to avoid undesirable interactions between the gratings) and/or ii) less than 1.2m, typically less than 1 m (this helps to ensure that the gratings are subjected to the same ambient conditions (i.e. identical or at least very similar ambient conditions).

Embodiments of the invention will now be described, by way of example only, with reference to the figures of which:
Figure 1 is a schematic drawing (not to scale) showing an infrared radiation sensor according to the invention;
Figure 2 shows two graphs showing a shift of the Bragg wavelength of a FBG as a function of incident IR radiation;
Figure 3 is a graph showing the response of different infrared sensors;
Figure 4 is a schematic drawing showing a portion of an infrared radiation sensor comprising a sheath;
Figure 5a is a schematic side view showing a portion of an infrared radiation sensor comprising a parabolic mirror;
Figure 5b is a schematic cross section corresponding to Figure 5a; and
Figure 6 is a graph showing the response of the infrared sensor of example 3.

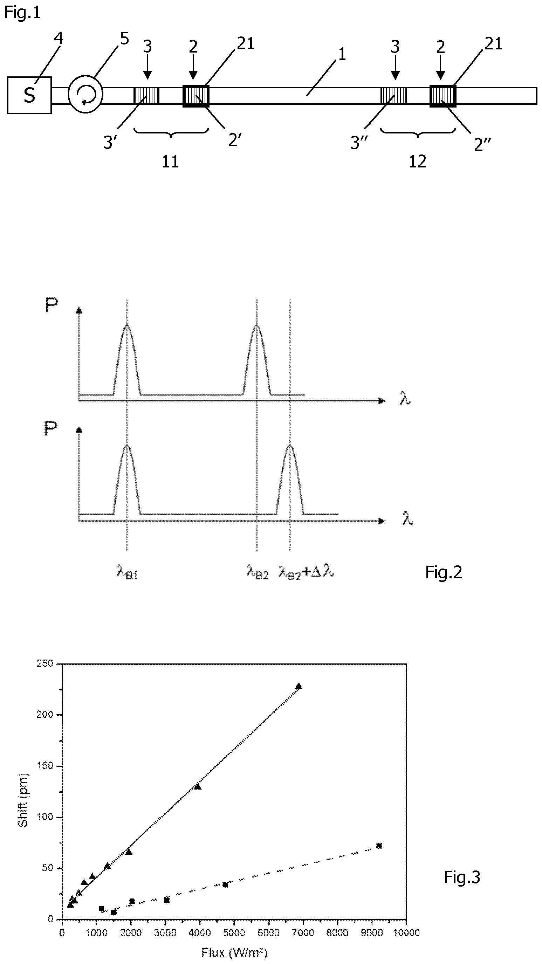

Figure 1 shows an IR sensor according to the invention, comprising a single optical fibre (1) having two spaced detection zones (11, 12) arranged along its length. Each detection zone has an IR detection zone (2) and an adjacent reference zone (3). The IR detection zone (2) comprises an IR detection zone grating (2', 2"), preferably a Bragg grating, which provides a temperature sensitive detection zone associated with an infrared absorbing material (21) present at the external surface of the optical fibre. The reference zone (3) comprises and a reference grating (3', 3"), preferably a Bragg grating, left uncoated. The arrangement also comprises a source S (4) and an optical spectral analyser (5). The gratings form cascaded pairs of gratings, each pair comprising a reference grating and an IR detection zone grating.

Figure 2 shows two graphs: the upper graph shows a reflectance spectrum of a single detection zone (11) in a steady state condition when not exposed to IR radiation and the lower graph shows a similar reflectance spectrum when the detection zone (11) is exposed to IR radiation. For clarity and simplification Figure 2 only shows the reflectance spectrum of one of the detection zones (11, 12) of the Figure 1 device. The P axis is the reflected power (with an arbitrary unit); λ is the wavelength. Towards the left part of the graph the nominal Bragg peak (B1) of the reference grating (3') is shown i.e. the normal Bragg peak at atmospheric temperature; towards the right part of the graph the nominal Bragg peak (B2) of the IR detection zone grating associated with the IR absorbing material is shown. The temperature increase at the IR detection zone grating (2') associated with the absorbing material (21) when the detection zone (11) is subjected to IR radiation is revealed by the shift in the Bragg wavelength Δλ.

Thus, it can bee seen that the sensor comprises an optical fibre (1) having: a temperature sensitive detection zone (2') and an associated infrared absorbing material (21) associated with an external surface of the optical fibre at at least one position along the fibre's length; and a reference grating (3') positioned adjacent to the temperature sensitive detection zone (2'). The infrared absorbing material (21) undergoes a temperature increase when subjected to an infrared radiation and such temperature increase is adapted to be detected by the temperature sensitive detection zone (2').

The reference zone (3) and the IR detection zone (2) are adjacent to each other along the lengths of the fibre (1) so that they are subject to substantially the same ambient temperature conditions. A gradual change in the ambient temperature will thus provoke a similar shift in the Bragg wavelength of both the reference grating (3') and the IR detection zone grating (2'). Thus, monitoring the difference between the Bragg wavelength of the reference grating (3') and the Bragg wavelength of IR detection zone grating (2') provides an indication of incident infrared radiation which includes a compensation for ambient temperature change. This allows a more accurate indication of incident infrared radiation than would otherwise be the case. In the case, for example, of use of the sensor as a fire detector, this allows a smaller shift in the Bragg wavelength of the IR detection zone grating (or a smaller speed of shift) to be used as a warning or detection limit and can thus provide earlier warning and/or fewer false alarms.

### Example 1

In this example, an IR sensor is manufactured using a standard monomode fibre from the company Dow Corning. The source is a large range ASE laser source (1200-1800 nm). Fibre Bragg Gratings with a FBG period Λ=500 nm, a length = 10 mm and a Bragg wavelength of 1553 nm are inscribed in the fibre at a plurality of positions along the fibre length (distant by a few centimetres).

An absorbing layer of CuO is coated around the fibre at regular intervals, corresponding to the positions of some of the FBGs (the detection FBGs). Other FBGs are left uncoated to serve as reference (the reference FBGs).

The infrared source is a laboratory furnace at 700° C. The intensity of the radiation is varied by changing the distance between the furnace and the fibre. The intensity of the radiation is measured with a total thermal flux sensor (CAPTEC). The intensity is integrated on the whole infrared spectrum (from 0,7 to 25 µm).

The reflected spectrum is analysed by means of an OSA (Optical Spectra Analyser). The minimum resolution is 10 pm.

When the sensor is exposed to IR radiation, the distance between the Bragg peak of the detection FBGs subjected to this radiation and the Bragg peak of a reference grating is modified. IR radiation intensity measurements are obtained through the monitoring of this differential shift between both Bragg wavelengths.

Figure 3 shows, in a dashed line, the response of one detection zone (11) of the device of example 1. It shows the relationship between the wavelength shift and the total intensity of the incident IR radiation.

The response time is very short (less than 1 second). The sensitivity (shift per unit of flux) is about 0.008 pm/(W/m²).

### Example 2

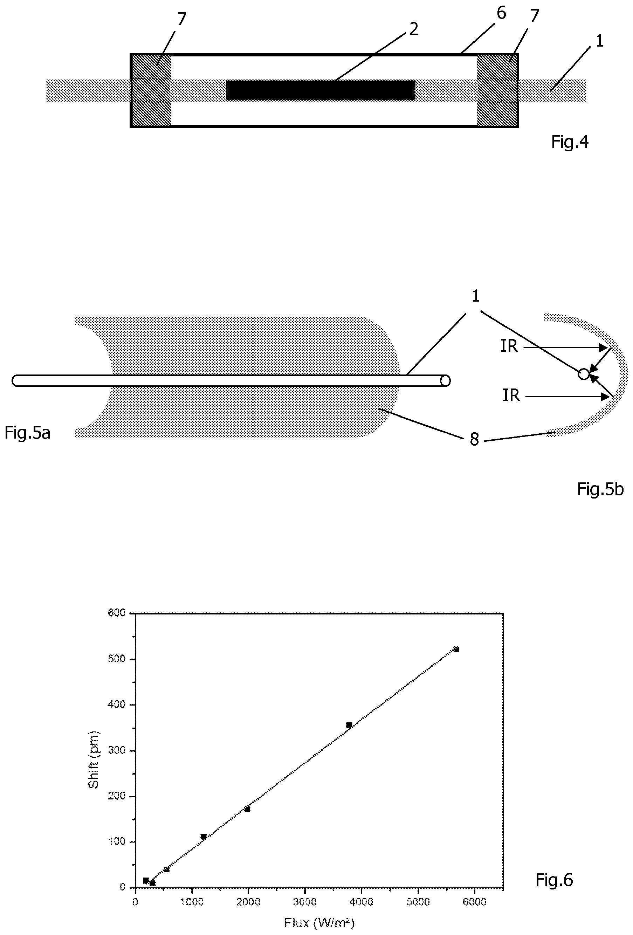

In this example, an IR sensor is manufactured according to example 1 and further comprises, around the fibre, at the IR detection zones at positions along the fibre at which FBGs are coated with the IR absorbing material, heat retainers in the form of glass cylinders of about 1 mm outside diameter. One of these fibre portions is shown in figure 4. Around a FBG coated with CuO (2) a sheath (6), which in the present example is a glass cylinder, is maintained in position with retaining corks (7). The glass cylinder provides heat confinement, thereby increasing the sensitivity of the device. Such sensitivity is about 0.03 pm/(W.m²).

Figure 3 shows the response of the device of example 2 (continuous line), compared to an identical device without a glass cylinder (dashed line - corresponding to example 1). It shows the relationship between the wavelength shift and the total intensity of the incident IR radiation.

### Example 3

In this example, an IR sensor is manufactured according to example 2 and further comprises, around the fibre and along the fibre's entire length, a tube made of a material reflecting IR radiation e.g. Al. At the reference zones at positions where FBGs are intended to measure a reference temperature, the fibre is completely surrounded by the Al tube; the tube reflects IR radiation and the reference FBGs are shielded from infrared radiation. At the IR detection zones at positions where the IR detection zone FBGs are coated with CuO, a "window" is created in the Al tube, so that the IR radiation enters through the window, is reflected on the concave inner surface of the tube and converges to the glass cylinder and the CuO coating. The working principle of such device is shown in figures 5a and 5b, where a parabolic mirror surface (8) reflects the IR radiation towards the fibre.

The device of example 3, combining the advantage of the glass cylinder and the Al tube, shows a further increased sensitivity of about 0.1 pm/(W/m²).

Figure 6 shows the response of one detection zone of the device of example 3. It shows the relationship between the wavelength shift and the total intensity of the incident IR radiation.

Sensors according to the invention may be used for applications which include: intrusion alarms, flame detection for fire detection or flame detection for combustion control in boilers, heat sources detection (flames, overheating) for safety, detectors for infrared spectrophotometry, pyrometry, and hot spots detection.

## Claims

1. An infrared radiation sensor comprising an optical fibre having a plurality of spaced detection zones arranged along its length, each detection zone comprising:
- a reference zone comprising a reference grating provided at the fibre; and
- an IR detection zone arranged to have a greater absorption to infrared radiation than the reference zone when the reference zone and the IR detection zone are subjected to substantially the same ambient temperature conditions,
the IR detection zone comprising (i) an infrared absorber which increases its temperature when subjected to infrared radiation and (ii) an associated IR detection zone grating provided at the fibre adjacent to the reference grating which provides a temperature sensitive detection zone which is sensitive to an increase in temperature of the infrared absorber;
and wherein the infrared absorber and the associated IR detection zone grating are configured such that heat generated by the infrared absorber reaches the associated IR detection zone grating.

2. An infrared radiation sensor according to claim 1, in which the infrared absorber comprises an infrared absorbing coating provided at a surface of the optical fibre at the IR detection zone.

3. An infrared sensor according to claim 1 or claim 2, wherein the infrared absorber comprises a material selected from the group consisting of CuO, MnO₂, C, Fe₃O₄, Co₃O₄ and organic black dyes.

4. An infrared sensor according to any preceding claim, wherein the reference grating and the IR detection zone grating are selected from Fibre Bragg Gratings (FBGs) and Long Period Gratings (LPGs).

5. An infrared sensor according to any preceding claim, wherein the distance along the optical fibre between the reference grating and the IR detection zone grating is less than 1m.

6. An infrared sensor according to any preceding claim, wherein the reference zone comprises an infrared reflector configured to shield the reference grating from incident infrared radiation.

7. An infrared sensor according to any preceding claim, wherein the IR detection zone comprises a sheath around the fibre, said sheath being arranged to provide confinement of heat around the IR detection zone grating.

8. An infrared sensor according to any preceding claim, wherein the IR detection zone comprises a concentrator adapted to concentrate infrared radiation towards the infrared absorber.

9. An infrared sensor according to any preceding claim, further comprising signal processing equipment adapted to detect changes at the IR detection zone grating upon subjecting the IR detection zone to incident infrared radiation and to provide an indication of the location and/or the intensity of the incident IR radiation.

10. An infrared sensor according to any preceding claim, wherein the sensor has a sensitivity of at least 0.01 pm/(W/m²) and/or a detection limit of at least 100 W/m².

11. An infrared sensor according to any preceding claim, wherein at each detection zone, the reference grating and the IR detection zone grating have different nominal periods.

12. An infrared sensor according to any of claims 1 to 10, wherein at each detection zone, the reference grating and the IR detection zone grating have same nominal period.

13. An optical fibre adapted for use in an infrared sensor in accordance with any preceding claim, in which the optical fibre has a plurality of spaced detection zones arranged along its length, each detection zone comprising:
- a reference zone comprising a reference grating provided at the fibre; and
- an IR detection zone arranged to have a greater absorption to infrared radiation than the reference zone when the reference zone and the IR detection zone are subjected to substantially the same ambient temperature EP 11 708 827.8 Amended claims in response to R71(3) conditions,
the IR detection zone comprising (i) an infrared absorber which increases its temperature when subjected to infrared radiation and (ii) an associated IR detection zone grating provided at the fibre adjacent to the reference grating which provides a temperature sensitive detection zone which is sensitive to an increase in temperature of the infrared absorber;
and wherein the infrared absorber and the associated IR detection zone grating are configured such that heat generated by the infrared absorber reaches the associated IR detection zone grating.

14. A method of detection of incident infrared radiation along an infrared radiation sensor in accordance with any of preceding claims 1-12 comprising the step of detecting a shift in the resonance wavelength of the IR detection zone grating of a detection zone with respect to the resonance wavelength of its associated reference grating.

15. A method in accordance with claim 14, in which at each detection zone, the reference grating and the IR detection zone grating have the same nominal wavelength and in which the step of detecting a shift in the resonance wavelength of the IR detection zone grating with respect to the resonance wavelength of its associated reference grating comprises detecting a change in power of an optical signal affected by the gratings.

## Patentansprüche

1. Infrarotstrahlungs-Glasfasersensor aufweisend eine Vielzahl voneinander beabstandeter Erfassungszonen, die jede entlang seiner Glasfaserlänge angeordnet sind, jede Erfassungszone aufweisend:
- eine Referenzzone mit einem Referenzgitter an der Faser; und
- eine IR-Erfassungszone, die so ausgerichtet ist, dass sie eine grössere Infrarotstrahlenabsorpion aufweist als die Referenzzone, wenn die Referenzzone und die IR-Erfassungszone im Wesentlichen gleichen Umgebungstemperaturbedingungen ausgesetzt sind,
wobei die IR-Erfassungszone (i) einen Infrarotabsorber aufweist, dessen Temperatur steigt, wenn er Infrarotstrahlen ausgesetzt ist, und (ii) ein damit verbundenes IR-Erfassungszonengitter aufweist, das an der dem Referenzgitter angrenzenden Faser angebracht ist, und das eine temperaturempfindliche Erfassungszone bereitstellt, die empfindlich ist gegenüber einer Temperaturerhöhung des Infrarotabsorbers;
und wobei der Infrarotabsorber und das damit verbundene IR-Erfassungszonengitter so ausgelegt sind, dass die durch die Infrarotabsorber erzeugte Wärme das damit verbundene IR-Erfassungszonengitter erreicht.

2. Infrarotstrahlungs-Glasfasersensor nach Anspruch 1, wobei der Infrarotabsorber einen Infrarot absorbierenden Überzug auf der Oberfläche der Glasfaser der IR-Erfassungszone aufweist.

3. Infrarotsensor nach Anspruch 1 oder 2, wobei der Infrarotabsorber ein Material ausgewählt aus der Gruppe bestehend aus CuO, MnO₂, C, Fe₃O₄, Co₃O₄ und organische schwarze Farbstoffe aufweist.

4. Infrarotsensor nach einem der vorhergehenden Anspüche, wobei das Referenzgitter und das IR-Erfassungszonengitter ausgewählt sind aus Faser-Bragg-Gitter (FBGs) und Gitter mit grosser Gitterperiode (LPGs).

5. Infrarotsensor nach einem der vorhergehenden Ansprüche, wobei der Abstand entlang der Glasfaser zwischen Referenzgitter und IR-Erfassungszonengitter kleiner ist als 1m.

6. Infrarotsensor nach einem der vorhergehenden Ansprüche, wobei die Referenzzone einen Infrarotreflektor aufweist, der so ausgelegt ist, das Referenzgitter von einfallender Infrarotstrahlung abzuschirmen.

7. Infrarotsensor nach einem der vorhergehenden Ansprüche, wobei die IR-Erfassungszone einen um die Faser angeordneten Mantel aufweist, der so ausgelegt ist, dass er einen Einschluss der Wärme um das IR-Erfassunszonengitter formt.

8. Infrarotsensor nach einem der vorhergehenden Ansprüche, wobei die IR-Erfassungszone einen Konzentrator aufweist, der so ausgelegt ist, dass er Infrarotstrahlung zum Infrarotabsorber hin konzentriert.

9. Infrarotsensor nach einem der vorhergehenden Ansprüche, weiter aufweisend eine Signalverarbeitungsvorrichtung, die so ausgelegt ist, dass sie Änderungen am IR-Erfassungszonengitter erfasst, nachdem die IR-Erfassungszone einer einfallenden Infrarotstrahlung ausgesetzt worden ist, und dass sie einen Hinweis auf den Ort und/oder auf die Intensität der IR-Strahlung gibt.

10. Infrarotsensor nach einem der vorhergehenden Ansprüche, wobei der Sensor eine Empfindlichkeit von wenigstens 0,01 pm/(W/m²) und/oder eine Erfassungsgrenze von wenigstens 100 W/m² aufweist.

11. Infrarotsensor nach einem der vorhergehenden Ansprüche, wobei in jeder Erfassungszone das Referenzgitter und das IR-Erfassungszonengitter verschiedene Nominalperioden aufweisen.

12. Infrarotsensor nach einem der Ansprüche 1 bis 10, wobei in jeder Erfassungszone das Referenzgitter und das IR-Erfassungszonengitter die gleiche Nominalperiode aufweisen.

13. Glasfaser zur Verwendung in einem Infrarotsensor nach einem der vorhergehenden Ansprüche, wobei die Glasfaser eine Vielzahl voneinander beabstandeter Erfassungszonen aufweist, die jede entlang ihrer Länge angeordnet sind, jede Erfassungszone aufweisend:
- eine Referenzzone mit einem Referenzgitter an der Faser; und
- eine IR-Erfassungszone, die so ausgerichtet ist, dass sie eine grössere Infrarotstrahlenabsorpion aufweist als die Referenzzone, wenn die Referenzzone und die IR-Erfassungszone im Wesentlichen gleichen Umgebungstemperaturbedingungen ausgesetzt sind,
wobei die IR-Erfassungszone (i) einen Infrarotabsorber aufweist, dessen Temperatur steigt, wenn er Infrarotstrahlen ausgesetzt ist, und (ii) ein damit verbundenes IR-Erfassungszonengitter aufweist, das an der dem Referenzgitter angrenzenden Faser angebracht ist, und das eine temperaturempfindliche Erfassungszone bereitstellt, die empfindlich ist gegenüber einer Temperaturerhöhung des Infrarotabsorbers;
und wobei der Infrarotabsorber und das damit verbundene IR-Erfassungszonengitter so ausgelegt sind, dass die durch die Infrarotabsorber erzeugte Wärme das damit verbundene IR-Erfassungszonengitter erreicht.

14. Verfahren zur Erfassung von einfallender Infrarotstrahlung an einem Infrarotsensor nach einem der Ansprüche 1 bis 12 aufweisend den Schritt der Erfassung einer Verschiebung in der Resonanzwellenlänge des IR-Erfassungszonengitters einer Erfassungszone gegenüber der Resonanzwellenlänge des damit verbundenen Referenzgitters.

15. Verfahren nach Anspruch 14 wobei bei jeder Erfassungszone das Referenzgitter und das IR-Erfassungszonengitter die gleiche Nominalwellenlänge aufweisen, und wobei der Schritt der Erfassung einer Verschiebung in der Resonanzwellenlänge des IR-Erfassungszonenengitters gegenüber der Resonanzwellenlänge des damit verbundenen Referenzgitters die Erfassung einer Leistungsänderung eines durch die Gitter beeinflussten optischen Signals umfasst.

## Revendications

1. Capteur de rayonnement infrarouge comprenant une fibre optique ayant une pluralité de zones de détection espacées et disposées le long de sa longueur, chaque zone de détection comprenant :
- une zone de référence comprenant un réseau de référence mis à disposition sur la fibre ; et
- une zone de détection IR aménagée pour avoir une plus grande absorption du rayonnement infrarouge que la zone de référence quand la zone de référence et la zone de détection IR sont soumises à substantiellement les mêmes conditions de température,
la zone de détection IR comprenant (i) un absorbant infrarouge qui augmente sa température quand soumis au rayonnement infra-rouge et (ii) un réseau de zone de détection IR associé mis à disposition sur la fibre à côté du réseau de référence fournissant une zone de détection sensible à la température qui est sensible à une augmentation en température de l'absorbant infrarouge ;
et dans lequel l'absorbant infrarouge et le réseau de zone de détection IR associé sont configurés de sorte que la chaleur générée par l'absorbant infrarouge atteigne le réseau de zone de détection IR.

2. Capteur de rayonnement infrarouge selon la revendication 1, dans lequel l'absorbant infrarouge comprend un revêtement absorbant l'infrarouge mis à disposition sur une surface de la fibre optique à la zone de détection IR.

3. Capteur de rayonnement d'infrarouge selon la revendication 1 ou la revendication 2, dans lequel l'absorbant infrarouge comprend un matériau sélectionné parmi le groupe consistant en CuO, MnO₂, C, Fe₃O₄, Co₃O₄ et les colorants organiques noires.

4. Capteur de rayonnement infrarouge selon l'une quelconque revendication précédente, dans lequel le réseau de référence et le réseau de zone de détection IR sont sélectionnés parmi les réseaux de fibre de Bragg (Fibre Bragg Gratings FBGs) ou les réseaux à longue période (Long Period Gratings LPGs).

5. Capteur de rayonnement infrarouge selon l'une quelconque revendication précédente, dans lequel la distance le long de la fibre optique entre le réseau de référence et le réseau de zone de détection IR est inférieure à 1m.

6. Capteur de rayonnement infrarouge selon l'une quelconque revendication précédente, dans lequel la zone de référence comprend un réflecteur infrarouge configuré pour blinder le réseau de référence de rayonnement infrarouge incident.

7. Capteur de rayonnement infrarouge selon l'une quelconque revendication précédente, dans lequel la zone de détection IR comprend une gaine autour de la fibre, ladite gaine étant aménagée pour fournir un confinement de la chaleur autour du réseau de zone de détection IR.

8. Capteur de rayonnement infrarouge selon l'une quelconque revendication précédente, dans lequel la zone de détection IR comprend un concentrateur adapté pour concentrer un rayonnement infrarouge en direction de l'absorbant infrarouge.

9. Capteur de rayonnement infrarouge selon l'une quelconque revendication précédente, comprenant en outre un équipement de traitement du signal adapté à détecter des variations au réseau de zone de détection IR lorsqu'on soumet la zone de détection IR à un rayonnement infrarouge incident et à fournir une indication de la localisation et/ou de l'intensité du rayonnement IR incident.

10. Capteur de rayonnement infrarouge selon l'une quelconque revendication précédente, dans lequel le capteur a une sensibilité d'au moins 0,01 pm/(W/m²) et/ou une limite de détection d'au moins 100 W/m².

11. Capteur de rayonnement infrarouge selon l'une quelconque revendication précédente, dans lequel, à chaque zone de détection, le réseau de référence et le réseau de zone de détection IR ont des périodes nominales différentes.

12. Capteur de rayonnement infrarouge selon l'une quelconque des revendications 1 à 10, dans lequel, à chaque zone de détection, le réseau de référence et le réseau de zone de détection IR ont la même période nominale.

13. Fibre optique aménagée pour être utilisée dans un capteur infrarouge selon l'un quelconque revendication précédente, dans laquelle la fibre optique a une pluralité de zones de détection espacées et disposées le long de sa longueur, chaque zone de détection comprenant :
- une zone de référence comprenant un réseau de référence mis à disposition sur la fibre ; et
- une zone de détection IR aménagée pour avoir une plus grande absorption du rayonnement infrarouge que la zone de référence quand la zone de référence et la zone de détection IR sont soumises à substantiellement les mêmes conditions de température,
la zone de détection IR comprenant (i) un absorbant infrarouge qui augmente sa température quand soumis au rayonnement infra-rouge et (ii) un réseau de zone de détection IR associé mis à disposition sur la fibre à côté du réseau de référence fournissant une zone de détection sensible à la température qui est sensible à une augmentation en température de l'absorbant infrarouge ;
et dans lequel l'absorbant infrarouge et le réseau de zone de détection IR associé sont configurés de sorte que la chaleur générée par l'absorbant infrarouge atteigne le réseau de zone de détection IR.

14. Procédé de détection de rayonnement infrarouge incident le long d'un capteur de rayonnement infrarouge selon l'une quelconque des revendications 1 à 12 comprenant l'étape de détecter un décalage dans la longueur d'onde de résonance du réseau de zone de détection IR d'une zone de détection par rapport à la longueur de résonance de son réseau de référence associé.

15. Procédé selon la revendication 14, dans lequel à chaque zone de détection, le réseau de référence et le réseau de zone de détection IR ont la même longueur d'onde nominale et dans lequel l'étape de détecter un décalage dans la longueur d'onde de résonance du réseau de zone de détection IR d'une zone de détection par rapport à la longueur de résonance de son réseau de référence associé comprend détecter une variation en puissance d'un signal optique affecté par les réseaux.
